## Europäisches Patentamt

## European Patent Office

## Office européen des brevets

(19)

(11) Veröffentlichungsnummer: **0 074 473**
**B1**

(12) **EUROPÄISCHE PATENTSCHRIFT**

(45) Veröffentlichungstag der Patentschrift:
**04.06.86**

(51) Int. Cl.⁴: **B 29 C 33/20,** B 29 C 45/00,
B 29 D 15/00

(21) Anmeldenummer: **82106010.0**

(22) Anmeldetag: **06.07.82**

(54) **Verfahren und Vorrichtung zur Herstellung von Formteilen oder Gegenständen aus Kunststoff.**

(30) Priorität: **27.08.81 DE 3133872**
**27.04.82 DE 3215588**

(43) Veröffentlichungstag der Anmeldung:
**23.03.83 Patentblatt 83/12**

(45) Bekanntmachung des Hinweises auf die Patenterteilung:
**04.06.86 Patentblatt 86/23**

(84) Benannte Vertragsstaaten:
**AT BE CH DE FR GB IT LI LU NL SE**

(56) Entgegenhaltungen:
**EP - A - 0 013 154**
**AT - B - 263 346**
**DE - A - 2 639 938**
**DE - A - 2 856 580**
**DE - A - 2 936 619**
**DE - A - 3 019 512**
**DE - B - 1 236 177**
**FR - A - 2 187 531**
**US - A - 4 150 088**

(73) Patentinhaber: **DEUTSCHE SOLVAY-WERKE GMBH,**
**Langhansstrasse 6, D-5650 Solingen 11 (DE)**

(72) Erfinder: **Käufer, Helmut, Prof. Dr., Florastrasse 64,**
**D-4021 Metzkausen (DE)**
Erfinder: **Burr, August, Dipl.-Ing., Czeminskistrasse 3,**
**D-1000 Berlin 62 (DE)**

(74) Vertreter: **Seiler, Siegfried, Langhansstrasse 6,**
**D-5650 Solingen 11 (DE)**

ACTORUM AG

**Beschreibung**

Die vorliegende Erfindung betrifft ein Verfahren und eine Vorrichtung zur Herstellung von Formteilen aus Kunststoff, wobei der zu verarbeitende Kunststoff unter Verwendung einer Vorrichtung zum Plastifizieren, vorzugsweise einer Spritzgiessmaschine, in ein darin angeordnetes Werkzeug mit einer oder mehreren Trennebenen eingespritzt und das Spritzgiessteil während der Abkühlphase im Werkzeug einer Druckbehandlung ausgesetzt wird und danach unter Verwendung eines neuen Formnestes mindestens einer Druckumformung (Pressreckung) ausgesetzt wird.

Aus DE-A-2 856 580 ist bereits ein Verfahren bekannt, bei dem durch spezielle Druckumformung während des Abkühlens nach der Urformung oder Umformung oder in einem getrennten Arbeitsprozess ein Strukturbildungsprozess durchgeführt wird. Dabei wird von extrudiertem, gegossenem oder gespritztem Halbzeug ausgegangen und eine Druckumformung durchgeführt. Das Verfahren hat u.a. den Nachteil, dass die umgeformten Formteile je nach ihrer äusseren Form und Stärke nicht masshaltig sind und/oder Fehlerstellen (z.B. Aussenhautdurchbrüche) aufweisen können.

Darüber hinaus ist dieses Druckumformungsverfahren für Formteile nicht möglich, deren projizierte Fläche in der Umformstempelbewegungsrichtung grösser ist als die des Umformstempels.

Aufgabe der vorliegenden Erfindung war es, die vorgenannten Nachteile zu vermeiden und das Verfahren gemäss DE-A-2 856 580 sowie die dabei verwendete Vorrichtung zur Herstellung der Kunststoff-Formteile sowie ggf. der damit hergestellten Formteile zu verbessern.

Erfindungsgemäss wurde festgestellt, dass unter Verwendung eines Verfahrens zur Herstellung von Formteilen aus Kunststoff, wobei der zu verarbeitende Kunststoff unter Verwendung einer Vorrichtung zum Plastifizieren, vorzugsweise einer Spritzgiessmaschine, in ein darin angeordnetes Werkzeug mit einer oder mehreren Trennebenen eingespritzt und das Spritzgiessteil während der Abkühlphase im Werkzeug einer Druckbehandlung ausgesetzt und danach unter Verwendung eines neuen Formnestes mindestens einer Druckumformung (Pressreckung) ausgesetzt wird, diese Aufgabe gelöst werden kann. Das Spritzgiessteil wird während der Abkühlphase im Werkzeug unter Verwendung der Druckkraft der Schliesseinheit einer Spritzgiessmaschine oder unter Verwendung von einem oder mehreren Hydraulikoder Druckluftzylinder(n) in Höhe von 50 bis 50000 KN, vorzugsweise 150 bis 10000 KN, erzeugt und bei Verwendung des neuen Formnestes einem Druck von 100 bis 800 N/mm² ausgesetzt, wobei die Schliesskraft und die Umformkraft bzw. Pressreckkraft getrennt regelbar sind.

Die Hydraulik- oder Druckluftzylinder, sind vorzugsweise an einer mit der Spritzgiessmaschine in Verbindung stehenden Kernzugeinrichtung angeschlossen, wobei die Kernzugeinrichtung der Spritzgiessmaschine mit Systemdrucken von 1 bis 100 N/mm², vorzugsweise 4 bis 25 N/mm², arbeitet.

Dadurch, dass nach der Erfindung die Schliesskraft und die Umformkraft bzw. Pressreckkraft getrennt regelbar sind, können Kunststoff-Formteile mit hoher Qualität (insbesondere Festigkeit) und guter Masshaltigkeit hergestellt werden.

Da auch die Umformgeschwindigkeit gemäss der Erfindung regelbar ist, werden Aussenhautdurchbrüche und andere Qualitätsminderungen gemäss dem Verfahren weitgehend vermieden.

Nach einer besonders vorteilhaften Ausführungsform wird der Kunststoff aus der Düse (1) in ein Formnest gespritzt, wobei die Trennebene(n) des Werkzeuges durch die entsprechende Schliesseinheit der Spritzgiessmaschine zugehalten wird bzw. werden. Während der Abkühlung des Spritzgiessteiles oder Formteiles (4) werden auf der Düsenseite bzw. Auswerferseite durch Öffnen der Trennebene (25) bzw. Trennebenen ein neues oder ein Teil eines neuen Formnestes in Arbeitsstellung zu dem Spritzgiessteil bzw. Formteil gebracht und durch erneutes Schliessen des Werkzeuges nach dem Ausfahren der Distanzleisten (2) oder ähnlicher Platten oder Werkzeugteile bzw. Mechanismen eine Druckumformung bzw. Pressreckung mittels der entsprechend einstellbaren Kraft, vorzugsweise stufenlos einstellbaren Kraft der Schliesseinheit, durchgeführt.

Nach einer Ausführungsform gelingt es, in rascher Reihenfolge die Druckumformung oder Pressreckung der Formteile und dgl. durchzuführen. Beispielsweise ist auch eine Pressreckung bzw. Umformung eines Teiles mit senkrechter Verformung zur Schliesskraftrichtung über die projizierte Fläche des Spritzgiessteils hinaus möglich, so dass die Fertigung unterschiedlich geformter Gegenstände gemäss dem Verfahren erweitert wird.

Die Plastifizierung und Werkzeugaufnahme erfolgt unter Verwendung einer Spritzgiessmaschine und einem damit in Verbindung stehenden Werkzeug. Das Spritzgiessteil wird dabei während der Abkühlphase im Werkzeug unter Verwendung einer Druckumformung (Pressreckung) ausgesetzt und nachfolgend in einem neuen oder teilweise neuen Formnest einer weiteren Druckumformung (Pressreckung) ausgesetzt, wobei die gewählte Zeit zwischen den beiden Pressbehandlungen in Abhängigkeit von dem Abkühl- und Rückstellverhalten des Kunststoffes eingestellt wird.

Nach einer Ausführungsform enthält der in das Formnest der Spritzgiessmaschine eingebrachte Kunststoff anorganische und/oder organische Fasern, Füllstoffe und/oder Verstärkungsstoffe. Die Fasern, Füllstoffe und/oder Verstärkungsstoffe weisen nach einer Ausführungsform ganz oder teilweise asymmetrische Formen auf. Durch diese Verwendung asymmetrischer Formen der Füllstoffe und/oder Verstärkungsstoffe können gezielte Orientierungen im Kunststoffgegenstand, Formteil usw. erhalten werden.

Die in das Formnest der Spritzgiessmaschine eingebrachte Kunststoffmischung besteht je 100 Gewichtsteile aus 0,1 bis 80 Gew.-Teilen, vorzugsweise 5 bis 45 Gew.-Teilen, anorganischen und/ oder organischen Fasern, Füllstoffen oder Verstärkungsstoffen und 99,9 bis 20 Gew.-Teilen, vorzugsweise 95 bis 55 Gew.-Teilen, Kunststoffen, wobei ggf. zusätzliche Verarbeitungshilfsmittel eingesetzt werden.

Die in dem Kunststoff enthaltenen Fasern weisen vorteilhaft eine Faserlänge von 0,001 bis 10 mm, vorzugsweise 0,05 bis 5 mm, auf.

Im neuen oder teilweise neuen Formnest können unterschiedliche Materialien, Kunststoffe oder Kunststoffmischungen verwendet werden, wobei die so erhaltenen Fertigteile die gleichen Abmessungen (bis auf eine evtl. Massabweichung in Umformstempelbewegungsrichtung) aufweisen.

Mit Hilfe des erfindungsgemässen Verfahrens wird beim Vergleich mit dem aus DE-A-2 856 580 bekannten Verfahren eine automatisierte, optimierte und massgenauere Fertigung von Form- bzw. Fertigteilen, pressgereckten bzw. umgeformten Formteilen und/oder dickwandigen lunkerarmeren oder lunkerfreien Formteilen, die kaum oder nicht zu Aussenhautdurchbrüchen führen, aus verstärkt und/oder gefüllten bzw. unverstärkt und/oder ungefüllten Kunststoffen ermöglicht. Weiterhin können im Gegensatz zum Verfahren der DE-A-2 856 580 auch komplizierte Formteile, beispielsweise Zahnräder, hergestellt werden.

Nach einer weiteren Ausgestaltung des erfindungsgemässen Verfahrens wird ein Spritzgiessteil über eine Düse, vorzugsweise Tauchdüse, die an den düsenseitigen Formnestereinsatz für das Spritzgiessteil auf Anschlag gefahren ist, angespritzt und gleichzeitig bzw. nahezu gleichzeitig ein zweites, bereits gespritztes Spritzgiessteil im Formnesteinsatz für das Fertigteil unter Druckeinwirkung durch einen Pressreckstempel umgeformt und der Anguss abgetrennt, nach Öffnen des Werkzeugs und Zurückfahren der Tauchdüse sowie Herausfahren der Werkzeugkerne aus den entsprechenden düsenseitigen Spritzgiessteil- bzw. Fertigteilformnesteinsätzen und Drehung entsprechender Formplatten bzw. Formplattenpakete auf der Schliessseite des Werkzeugs das fertige Formteil ausgeworfen bzw. entformt wird und nach Beendigung der Drehbewegung vorzugsweise um 180° und unter Schliessen des Werkzeugs der Kern des einen Pressreckstempels mit dem aufgeschrumpften, gespritzten Spritzgiessteil in den Formnesteinsatz für das Fertigteil und der freie Kern des anderen Pressreckstempels in den Formnesteinsatz für das Spritzgiessteil einrastet.

Vorteilhaft erfolgt die Druckumformung des Spritzgiessteils durch den Pressreckstempel nach dem Schliessen des Werkzeugs während des Zusammendrückens der Tellerfederpakete, die zwischen den schliessseitigen Formplattenpaketen angeordnet sind, unter Verwendung der Kraft der Schliesseinheit einer Spritzgiessmaschine oder unter Verwendung einer oder mehrerer Hydraulik- oder Druckluftzylinder.

Zweckmässig halten die Tellerfedern und/oder mechanischen und/oder hydraulischen Verriegelungen allein die Trennebene während des Spritzvorgangs des Vorformlings, des Pressreckvorgangs und der sich anschliessenden Druckhaltezeit geschlossen.

Es hat sich weiterhin als vorteilhaft erwiesen, das Anspritzen des einen Spritzgiessteils innerhalb der Zeitdauer der Verformung des anderen Spritzgiessteils durch Pressrecken durchzuführen.

Die Erfindung betrifft weiterhin Vorrichtungen zur Herstellung von Formteilen aus Kunststoff, vorzugsweise unter Verwendung des erfindungsgemässen Verfahrens. Diese Vorrichtungen bestehen aus einer Spritzgiessmaschine und einem formgebenden Werkzeug mit einer oder mehreren Trennebenen. Die Spritzgiessmaschine ist erfindungsgemäss sowohl als Presse für die Zuhaltung der Trennebene(n) am Werkzeug beim Spritzen als auch als Presse für eine oder mehrere Umformungen (Pressreckungen) des Spritzgiessteils und/oder als Presse für eine Nachdruckausübung auf das Formteil ausgebildet, wobei während des Spritzgiessens die aus einer maschinellen Vorrichtung zum Schliessen des Werkzeuges bestehende Schliesseinheit zunächst für die Zuhaltung der Trennebene(n) am Werkzeug zum Spritzen eines Spritzgiessteils bzw. Formteiles und nachfolgend getrennt steuerbar als Presse für eine oder mehrere Umformungen (Pressreckungen) und/oder für eine Nachdruckausübung auf das Formteil eingesetzt wird.

Das Werkzeug enthält einen oder mehrere über Kernzüge gesteuerte Schieber, der bzw. die die entsprechenden Formnester auf der Düsenseite bzw. Auswerferseite in die jeweilige Arbeitsstellung bewegt oder bewegen. In einem ersten Arbeitsgang wird das Spritzgiessteil gespritzt und durch Schieberbewegung mittels Hydraulikzylinder, die angeschlossen an die Kernzugeinrichtungen der Spritzgiessmaschine sind, ohne bzw. nach Öffnung der Trennebene das Spritzgiessteil(e) bzw. Formteil(e) in ein zweites Formnest unter Mitwirkung der Schliesseinheit der Spritzgiessmaschine als Presse eingeführt und umgeformt.

Die Kernzugeinrichtungen und Hydraulikzylinder sind vorzugsweise als Presse zum Umformen (Pressrecken) und/oder Nachdruckausübung ausgebildet.

Nach einer Ausführungsform ist ein externes Hydraulikaggregat als Presse zum Umformen (Pressrecken) und/oder Nachdruckausübung ausgebildet.

Nach einer bevorzugten Ausführungsform sind an dem Werkzeug bzw. einem Werkzeugteil Tellerfedern und/oder mechanische Verriegelung(en) und/oder hydraulische Einrichtungen angeordnet, die während der Umformung bzw. Pressreckung und/oder Nachdruckausübung die Trennebene(n) zuhalten.

Nach einer weiteren besonders zweckmässigen Ausführungsform ist für den Umformvorgang (Pressreckung) ein Umformstempel vorgesehen, der sowohl für die Umformung(en) bzw. Pressrek- kung(en) geeignet, als auch als Auswerferstempel ausgebildet ist.

Nach einer bevorzugten Ausführungsform ist die aus Kolben und Zylinder bestehende Druckkisseneinheit bei vollhydraulischen Spritzgiessmaschinen so ausgebildet, dass ein grösserer Umformweg vorhanden ist.

Die Steuerung des durch die Maschine bewirkten Umformvorganges erfolgt vorzugsweise durch elektrisch oder elektronisch gesteuerte Zusatzeinrichtungen (Prägeprogramm usw.).

Nach einer Ausführungsform wird die Umformgeschwindigkeit und/oder der Umformdruck hydraulisch unter Verwendung eines Reduzierventiles oder eines anderen Ventiles, das eine Geschwindigkeits- und/oder Druckregelung (z.B. Servoventil) zulässt, gesteuert.

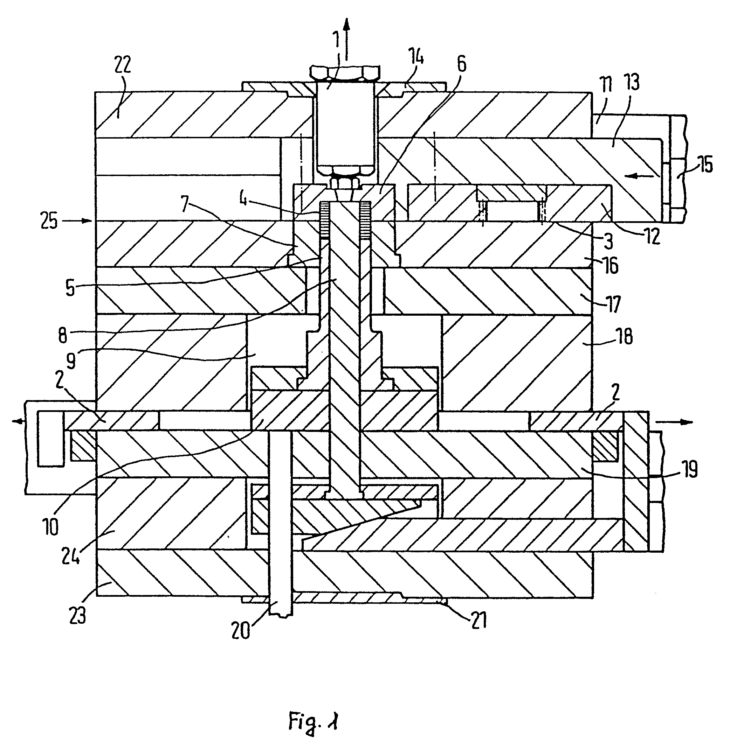

In der Fig. 1 ist eine bevorzugte Ausführungsform dieser Vorrichtung schematisch dargestellt.

Bezugszeichen zu Fig. 1:
1 Düse
2 Distanzleisten
3 Zahnradformnest
4 Spritzgiessteil
5 Umform- und Auswerferstempel
6 Formeinsatz-Vorspritzgiessteil-Düsenseite
7 Formeinsatz – Auswerferseite
8 Kern
9 Auswerferhohlraum
10 Auswerferplatte
11 Schieberführungsplatte
12 Formeinsatz – Zahnrad
13 Schieberplatte
14 Zentrierring
15 Hydraulikzylinder
16 Formplatte
17 Distanzplatte
18 Formplatte
19 Formplatte
20 Bewegungsstift
21 Zentrierring
22 Aufspannplatte – Düsenseite
23 Aufspannplatte – Auswerferseite
24 Formplatte
25 Trennebene

Aufbau

a) Düsenseite, bestehend aus Aufspannplatte 22 und Schieber-Führungsplatte 11 für horizontal beweglichen Schieber 13, in dem die entsprechenden Formnesteinsätze 6 und 12 untergebracht sind. Ausserdem kann bei Bedarf eine düsenseitige Auswerfereinheit eingebaut werden. Ein Hydraulik- bzw. Druckkraftzylinder 15 bewegt den Schieber 13 derart, dass sich entweder der Vorformlingseinsatz 6 oder das Formnest 3 (z.B. Zahnrad-Formnest) je nach Bedarf zentral an der Tauchdüse 1 befindet. Durch die Tauchdüse 1 wird das Spritzgiessteil direkt im Schieber 13 gespritzt.

b) Auswerferseite, bestehend aus zwei Drei-Formplatten-Paketen (16, 17, 18 und 19, 24, 23) oder ähnlichem Aufbau, welche zueinander eine z.B. 15 mm (in axialer Spritzrichtung gesehen) Relativbewegung auf Führungsbolzen ausführen können.

Ein Tellerfedersystem sorgt bei geöffnetem Werkzeug dafür, dass immer der maximale, von Befestigungsschrauben vorgegebene Abstand zwischen den Formplatten 18 und 19 eingenommen wird. Bei geöffnetem Werkzeug können somit zwei seitlich an der Auswerferseite gegenüberliegend angebrachte, gemeinsam gesteuerte Hydraulikzylinder die Distanzplatten 2 ein- oder ausfahren.

In den Formplattenpaketen befindet sich ein am hydraulischen Auswerfer der Maschine mit Bewegungsstiften 20 fest verbundenes Auswerfersystem und ein davon unabhängig beweglicher Kern 8.

Funktionsweise
Spritzen des Spritzgiessteils 4

Der Schieber 13 auf der Düsenseite befindet sich in der Stellung «Spritzgiessteil spritzen» (Formnesteinsatz 6 zentral vor Düse 1). Auswerferseitig sind die Distanzplatten 2 eingefahren. Werkzeug schliesst und die Tauchdüse 1 fährt in Formnesteinsatz 6 auf Anschlag. Spritzgiessteil wird gespritzt. Nach Beendigung des Spritzvorgangs «Spritzgiessteil spritzen» fährt die Düse 1 aus dem Schieber 13 heraus und das Werkzeug öffnet sich in der Trennebene 25 gleichzeitig.

Pressreckung

Am Ende des Werkzeugöffnungsweges werden, ausgelöst durch elektrische Kontakte (Endschalter), der oder die Schieber 13 und die Distanzleisten 2 oder ähnliches mittels Hydraulikzylinder betätigt. Die Düsenseite wechselt dabei den oder die Schieber 13 auf Stellung «Pressrecken» (Formnest zentral vor Tauchdüse 1) und die auswerferseitigen Distanzleisten 2 werden herausgezogen. Beim anschliessend erneuten Schliessen des Werkzeugs taucht der mit dem Spritzgiessteil ummantelte Kern in das Formnest 3 (z.B. Zahnrad-Formnest) ein und mittels der entsprechend eingestellten Kraft an der Schliesseinheit der Spritzgiessmaschine presst man die beiden Formpakete auf der Auswerferseite zusammen; gleichzeitig wird der Kern und der Umform- bzw. Auswerferstempel 5 axial in Richtung Düse 1 vorbewegt und schert dabei den Anguss vom Spritzgiessteil ab. Dabei wirkt die Kraft auf die Ringfläche des Spritzgiessteils, der dadurch z.B. zum Zahnrad umgeformt wird. Durch ein eingebrachtes Federpaketesystem oder ähnliches wird ein Öffnen der Trennebene 25, verursacht durch axial wirkende Umformkräfte der projizierten, neu entstandenen Stirnfläche der Zähne, verhindert. Nach Beendigung des Pressreckvorganges öffnet das Werkzeug nach einer entsprechend eingestellten Druckhaltezeit, und der Umformstempel 5 streift mittels hydraulischer Betätigung des Maschinenauswerfers das Formteil, z.B. Zahnrad vom Kern 8 ab, oder das Teil wird düsenseitig durch spezielle düsenseitige Auswerfereinheit entformt. Die Distanzplatten 2 und der bzw. die Schieber 13 werden wieder in Ausgangsstellung «Spritzgiessteil spritzen» gebracht.

Gemäss einer besonders vorteilhaften Neuführungsform besteht das formgebende Werkzeug düsenseitig aus einer fest angeordneten, vorzugsweise kreisförmig ausgebildeten Aufspannplatte bzw. Aufspannplattenpaket mit je einem Formnesteinsatz für das Spritzgiessteil und das Fertigteil und schliessseitig aus um einen fest angeordneten Drehbolzen, der mit einer Formplatte und einer Aufspannplatte fest verbunden ist, um den Drehbolzen drehbaren, vorzugsweise kreisförmig ausgebildeten Formplattenpaketen, welche zwei in Führungsbuchsen bewegliche Pressreckstempel aufnehmen, wobei die Pressreckstempel derart angeordnet sind, dass sie mit den zugeordneten Formnesteinsätzen in der düsenseitigen Aufspannplatte fluchten und die mit dem Drehbolzen fest verbundene, nicht drehbare Formplatte auf der Schliessseite eine Bohrung bzw. Aussparung für die Aufnahme des Kopfes eines der beiden Pressreckstempel beim Schliessen des formgebenden Werkzeugs aufweist.

Weitere Vorteile dieser Ausführungsform ergeben sich durch die in den Ansprüchen 22 bis 27 genannten Merkmale.

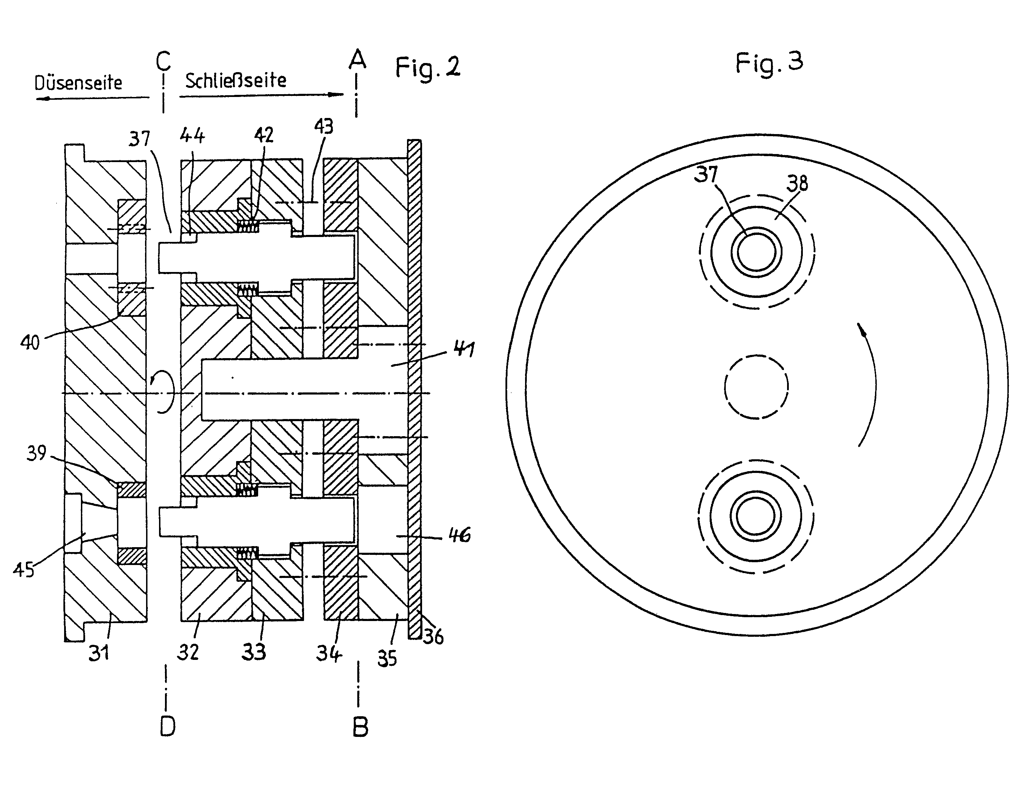

Anhand der in den Figuren 2 bis 5 schematisch dargestellten Ausführungsbeispielen wird im folgenden diese Ausführungsform näher erläutert. Es zeigt

Fig. 2 die erfindungsgemässe Vorrichtung im Schnitt im geöffneten Zustande;

Fig. 3 eine Draufsicht auf die Formplatte der Fig. 2;

Fig. 4 eine Draufsicht auf eine weitere vorteilhafte Ausführungsform mit düsenseitiger Aufspannplatte mit vier Formnesteinsätzen;

Fig. 5 eine Draufsicht auf eine weitere vorteilhafte Ausführungsform mit düsenseitiger Aufspannplatte mit vier Pressreckstempeln.

Diese Vorrichtung weist durch das Vorhandensein einer Trennebene C–D einen zweiteiligen Aufbau auf, der in einen düsenseitigen und einen schliessseitigen Teil unterteilt ist. Die Düsenseite besteht aus einer vorzugsweise kreisförmigen Aufspannplatte oder Aufspannplattenpaket 31 für die Aufnahme je eines Formnesteinsatzes für das Spritzgiessteil 39, der mit einem Hohlraum 45 für die Tauchdüse in Verbindung steht, und das Fertigteil 40, die symmetrisch zueinander angeordnet sind. Die Aufspannplatte bzw. das Aufspannplattenpaket 31 ist normalerweise fest, kann aber nach einer Ausführungsform drehbar oder auf- und abwärts bewegbar ausgebildet sein.

Die Schliessseite der Vorrichtung besteht aus der Formplatte bzw. den Formplattenpaketen 32, der Zwischenformplatte 33 und der Drehplatte 34, die vorzugsweise kreisförmig ausgebildet sind, in denen die schliessseitigen Formnester 44 und die Pressreckstempel 37 mit den Führungsbuchsen 38 sowie der Drehbolzen 41, der mit der Formplatte 35 und der schliessseitigen Aufspannplatte 36 fest verbunden ist, aufgenommen sind. Jeder Pressreckstempel 37 kann als Kern und Hülse getrennt ausgebildet sein und erlaubt bei Verwendung einer weiteren Zwischenplatte eine Relativbewegung zum Ausstossen des Formteils auf der Schliessseite. Der vorgegebene Abstand zwischen den Formplatten 33 und 34 wird durch die Tellerfederpakete 43 konstant gehalten. Die ebenfalls vorzugsweise kreisförmig ausgebildete Formplatte 35 ist mit einer Bohrung bzw. Aussparung 46 für die Aufnahme des Kopfes eines der beiden Pressreckstempel 37 versehen. Das Federpaket 42 drückt den Pressreckstempel 37 bei geöffneter Vorrichtung in die Ausgangsposition.

In geöffnetem Zustande der erfindungsgemässen Vorrichtung sind die Formplatten bzw. Formplattenpakete 32 bis 34 um den Drehbolzen 41 an der Drehebene A–B drehbar, vorzugsweise um 180°. Die Drehbewegung kann mechanisch oder hydraulisch erfolgen.

Funktionsweise

Bei geschlossener Vorrichtung laufen folgende Vorgänge ab (ausser dem ersten Spritzzyklus):

Zunächst wird das Spritzgiessteil über eine Düse, vorzugsweise eine Tauchdüse, im Hohlraum 45 angespritzt, was auch mit zeitlicher Verzögerung während der Druckhaltezeit nach der Umformung erfolgen kann. Gleichzeitig oder nahezu gleichzeitig wird ein bereits gespritztes Spritzgiessteil in das Formnest 40 eingetaucht und durch Druckeinwirkung, beispielsweise Druckkissen einer vollhydraulischen Spritzgiessmaschine, und sich daraus ergebender Abstandsverringerung zwischen den Formplatten bzw. Formplattenpaketen 34 bis 36 und 32 bis 33 über den Pressreckstempel 37 umgeformt. Hierbei wird der Anguss automatisch abgetrennt. Auf der Schliessseite wirkt sich die Bewegung der Formplatte 34–36 wegen der Aussparung bzw. Bohrung 46 in der Formplatte 35 nicht aus, d.h. es erfolgt keine Umformung.

Nach Öffnung der Vorrichtung erfolgt schliesslich eine Drehbewegung der Formplatten 32–34 auf dem Drehbolzen 41 um vorzugsweise 180°, wobei das angespritzte Spritzgiessteil schliessseitig auf dem Kern des Pressreckstempels 37 durch Aufschrumpfen verbleibt. Gleichzeitig erfolgt die Auswerferbewegung düsenseitig (Formnest 40) oder schliessseitig (nicht eingezeichnet). Das Fertigteil wird hierbei entformt und das bereits angespritzte Spritzgiessteil in Press- bzw. Umformstellung fixiert. Die Vorrichtung schliesst erneut und der Zyklus beginnt wieder von vorn.

Mit Hilfe des erfindungsgemässen Verfahrens und der erfindungsgemässen Vorrichtung lässt sich eine Zykluszeitverringerung um ca. 40% erzielen, da das Spritzen eines Spritzgiessteils und das Pressrecken eines bereits angespritzten Spritzgiessteils parallel erfolgen. Ausserdem ist hierbei der Kraftaufbau, beispielsweise des Druckkissens einer vollhydraulischen Spritzgiessmaschine, nur einmal erforderlich, woraus eine Energieeinsparung resultiert. Ebenso ergibt sich durch den Wegfall der üblicherweise erforderlichen Distanzleisten am Pressreckwerkzeug sowie der Prägeschaltung an der Spritzgiessmaschine eine Vereinfachung des Aufbaus der Vorrichtung.

Die Spritzzeit des Spritzgiessteils ist vorteilhaft kürzer als die Pressreckzeit für das Spritzgiessteil. Beginn und Ende des Vorgangs «Spritzgiessteil spritzen» sind von den jeweiligen Optimierungsbedingungen abhängig.

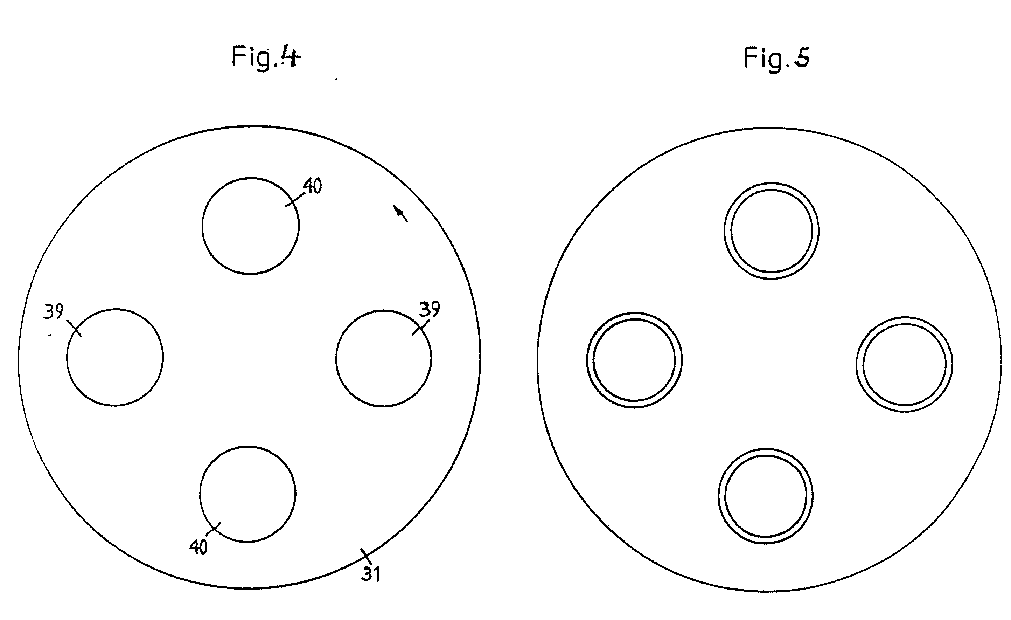

Durch eine Erhöhung der Anzahl der Pressreckstempel und der entsprechenden Anzahl der Formnesteinsätze in der erfindungsgemässen Vorrichtung lässt sich der Ausstoss noch weiter steigern. So zeigen die Figuren 4 und 5 eine vorteilhafte Ausführungsform einer derartigen Vorrichtung, in welcher gemäss Fig. 4 die düsenseitige Aufspannplatte 31 mit jeweils zwei Spritzgiessteil-Formnesteinsätzen 39 und zwei Fertigteil-Formnesteinsätzen 40, 90° versetzt, versehen und dementsprechend gemäss Fig. 5 schliessseitig um 90° versetzt, vier Pressreckstempel vorgesehen sind.

Das erfindungsgemässe Verfahren ist vorteilhaft bei der Verwendung eines oder mehrerer neuer oder teilweise neuer Formen zur Druckumformung (Pressreckung) und/oder Druckbehandlung in einer Temperaturführung so gestaltet, dass die Formnester, in denen die Druckumformung (Pressreckung) und/oder Druckbehandlung erfolgt, vorzugsweise auf eine niedrigere Temperatur eingestellt sind. Dies wird vorrichtungsseitig dadurch erzielt, dass getrennte Temperaturführungen für die Formnester zur Druckumformung (Pressreckung) und für die Formnester für die Herstellung des Spritzgiessteiles vorgesehen sind.

31. Düsenseitige Aufspannplatte
32. Formplatte
33. Zwischenformplatte
34. Drehplatte.
35. Formplatte
36. Schliessseitige Aufspannplatte
37. Pressreckstempel
38. Führungsbuchse
39. Formnesteinsatz für das Spritzgiessteil
40. Formnesteinsatz für das Fertigteil
41. Drehbolzen
42. Rückdrückfedern
43. Tellerfederpakete
44. Schliessseitiges Formnest
45. Hohlraum für Tauchdüse
46. Bohrung bzw. Aussparung für Pressreckstempelkopf
A–B = Drehebene
C–D = Trennebene

**Patentansprüche**

1. Verfahren zur Herstellung von Formteilen aus Kunststoff, wobei der zu verarbeitende Kunststoff unter Verwendung einer Vorrichtung zum Plastifizieren, vorzugsweise einer Spritzgiessmaschine, in ein darin angeordnetes Werkzeug mit einer oder mehreren Trennebenen eingespritzt und das Spritzgiessteil während der Abkühlphase im Werkzeug einer Druckbehandlung ausgesetzt wird und danach unter Verwendung eines neuen Formnestes mindestens einer Druckumformung (Pressreckung) ausgesetzt wird, dadurch gekennzeichnet, dass das Spritzgiessteil während der Abkühlphase im Werkzeug unter Verwendung der Druckkraft der Schliesseinheit einer Spritzgiessmaschine oder unter Verwendung von einem oder mehreren Hydraulik- oder Druckluftzylinder(n) in Höhe von

50 bis 50000 KN, vorzugsweise
150 bis 10000 KN,

erzeugt wird und bei Verwendung des neuen Formnestes das Spritzgiessteil einem Druck von

100 bis 800 N/mm²

ausgesetzt wird, wobei die Schliesskraft und die Umformkraft bzw. Pressreckkraft getrennt regelbar sind.

2. Verfahren nach Anspruch 1, dadurch gekennzeichnet, dass die Hydraulik- oder Druckluftzylinder an einer mit der Spritzgiessmaschine in Verbindung stehenden Kernzugrichtung angeschlossen sind, wobei die Kernzugrichtung der Spritzgiessmaschine mit Systemdrucken von

1 bis 100 N/mm², vorzugsweise
4 bis 25 N/mm²,

arbeitet.

3. Verfahren nach Anspruch 1, dadurch gekennzeichnet, dass aus der Düse (1) Kunststoff in ein Formnest gespritzt wird, wobei die Trennebene(n) des Werkzeuges durch die entsprechende Schliesseinheit der Spritzgiessmaschine zugehalten wird bzw. werden, dass während der Abkühlung des Spritzgiessteils bzw. Formteiles (4) auf der Düsenseite bzw. Auswerferseite durch Öffnen der Trennebene (25) ein anderes Formnest in Arbeitstellung zu dem Spritzgiessteil bzw. Formteil gebracht und durch erneutes Schliessen des Werkzeuges nach dem Ausfahren der Distanzleisten (2) oder ähnlichen Platten eine Druckumformung bzw. Pressreckung mittels der entsprechend einstellbaren Kraft, vorzugsweise stufenlos einstellbaren Kraft der Schliesseinheit, durchgeführt wird.

4. Verfahren nach Ansprüchen 1 bis 3, dadurch gekennzeichnet, dass das Spritzgiessteil nach der Druckumformung (Pressreckung) einer weiteren Druckumformung (Pressreckung) in einem neuen Formnest ausgesetzt wird, wobei die gewählte Zeit zwischen den beiden Pressbehandlungen in Abhängigkeit von dem Abkühl- und Rückstellverhalten des Kunststoffes eingestellt wird.

5. Verfahren nach Ansprüchen 1 bis 4, dadurch gekennzeichnet, dass der in das Formnest der Spritzgiessmaschine eingebrachte Kunststoff anorganische oder organische Fasern, Füllstoffe oder Verstärkungsstoffe enthält.

6. Verfahren nach Anspruch 5, dadurch gekennzeichnet, dass die Fasern, Füllstoffe oder Verstärkungsstoffe ganz oder teilweise asymmetrische Formen aufweisen.

7. Verfahren nach Ansprüchen 1 bis 6, dadurch gekennzeichnet, dass die in das Formnest der Spritzgiessmaschine eingebrachte Kunststoffmischung je 100 Gewichtsteile aus

0,1 bis 80 Gew.-Teilen, vorzugsweise
5 bis 45 Gew.-Teilen,

anorganischen oder organischen Fasern, Füllstoffen oder Verstärkungsstoffen und

99,9 bis 20 Gew.-Teilen, vorzugsweise
95 bis 55 Gew.-Teilen,

Kunststoff besteht, wobei ggf. zusätzlich Verarbeitungshilfsmittel eingesetzt werden.

8. Verfahren nach Ansprüchen 1 bis 7, dadurch gekennzeichnet, dass die in dem Kunststoff enthaltenen Fasern eine Faserlänge von

0,001 bis 10 mm, vorzugsweise
0,05 bis 5 mm,

aufweisen.

9. Verfahren nach einem oder mehreren der Ansprüche 1 bis 8, dadurch gekennzeichnet, dass für unterschiedliche Kunststoffe oder Kunststoffmischungen ein und dasselbe Formnest verwendet wird.

10. Verfahren nach Ansprüchen 1 oder 2, dadurch gekennzeichnet, dass ein Spritzgiessteil über eine Düse, vorzugsweise Tauchdüse, die an den düsenseitigen Formnesteinsatz für das Spritzgiessteil auf Anschlag gefahren ist, angespritzt und gleichzeitig bzw. nahezu gleichzeitig ein zweites bereits gespritztes Spritzgiessteil im Formnesteinsatz für das Fertigteil unter Druckeinwirkung durch einen Pressreckstempel umgeformt und der Anguss getrennt wird, nach Öffnen des Werkzeugs und Zurückfahren der Tauchdüse sowie Herausfahren der Werkzeugkerne aus den entsprechenden düsenseitigen Spritzgiessteil- bzw. Fertigteilformnesteinsätzen und Drehung entsprechender Formplatten bzw. Formplattenpakete auf der Schliessseite des Werkzeugs das fertige Formteil ausgeworfen bzw. entformt wird und nach Beendigung der Drehbewegung vorzugsweise um 180° und unter Schliessen des Werkzeugs der Kern des einen Pressreckstempels mit dem aufgeschrumpften, gespritzten Spritzgiessteil in den Formnesteinsatz für das Fertigteil und der freie Kern des anderen Pressreckstempels in den Formnesteinsatz für das Spritzgiessteil einrastet.

11. Verfahren nach Anspruch 10, dadurch gekennzeichnet, dass die Druckumformung des Spritzgiessteils durch den Pressreckstempel nach dem Schliessen des Werkzeuges während des Zusammendrückens der Tellerfederpakete, die zwischen den schliessseitigen Formplattenpaketen angeordnet sind, unter Verwendung der Kraft der Schliesseinheit einer Spritzgiessmaschine oder unter Verwendung einer oder mehrerer Hydraulik- oder Druckluftzylinder erfolgt.

12. Verfahren nach Anspruch 11, dadurch gekennzeichnet, dass die Tellerfedern allein die Trennebene während des Spritzvorgangs des Spritzgiessteils, des Pressreckvorgangs und der sich anschliessenden Druckhaltezeit geschlossen halten.

13. Verfahren nach Anspruch 12, dadurch gekennzeichnet, dass das Anspritzen des einen Spritzgiessteils innerhalb der Zeitdauer der Umformung des anderen Spritzgiessteils durch Pressreckung erfolgt.

14. Verfahren nach einem oder mehreren der Ansprüche 1 bis 13, dadurch gekennzeichnet, dass bei der Verwendung eines bzw. mehrerer neuer Formnester zur Druckumformung (Pressreckung) die Temperaturführung derart erfolgt, dass das bzw. die Formnester, in denen die Druckumformung (Pressreckung) erfolgt, vorzugsweise auf einer niedrigeren Temperatur gehalten werden als das bzw. die Formnester für die Herstellung des Spritzgiessteiles.

15. Vorrichtung zur Herstellung von Formteilen aus Kunststoff, vorzugsweise unter Verwendung des Verfahrens nach einem oder mehreren der Ansprüche 1 bis 9 bestehend aus einer Spritzgiessmaschine und einem formgebenden Werkzeug mit einer oder mehreren Trennebenen, dadurch gekennzeichnet, dass die Spritzgiessmaschine sowohl als Presse für die Zuhaltung der Trennebene(n) am Werkzeug beim Spritzen als auch als Presse für eine oder mehrere Umformungen (Pressreckungen) des Spritzgiessteil ausgebildet ist, wobei während des Spritzgiessens die aus einer maschinellen Vorrichtung zum Schliessen des Werkzeuges bestehende Schliesseinheit zunächst für die Zuhaltung der Trennebene(n) am Werkzeug zum Spritzen eines Spritzgiessteils bzw. Formteils und nachfolgend getrennt steuerbar als Presse für eine oder mehrere Umformungen (Pressreckungen) eingesetzt wird.

16. Vorrichtung nach Anspruch 15, dadurch gekennzeichnet, dass das Werkzeug einen oder mehrere über Kernzüge gesteuerte Schieber enthält, der bzw. die entsprechende Formnester auf der Düsenseite bzw. Auswerferseite in die jeweilige Arbeitsstellung bewegt oder bewegen, wobei in einem ersten Arbeitsgang das Spritzgiessteil gespritzt und durch Schieberbewegung mittels Hydraulikzylinder, die an die Kernzugeinrichtungen der Spritzgiessmaschine angeschlossen sind, ohne bzw. nach Öffnung der Trennebene der Vorformling(e) bzw. Formteil(e) in ein zweites Formnest unter Mitwirkung der Schliesseinheit der Spritzgiessmaschine als Presse eingeführt und umgeformt wird.

17. Vorrichtung nach Ansprüchen 15 und 16, dadurch gekennzeichnet, dass die Kernzugeinrichtungen und Hydraulikzylinder als Presse zum Umformen (Pressrecken) ausgebildet sind.

18. Vorrichtung nach Ansprüchen 15 bis 17, dadurch gekennzeichnet, dass ein externes Hydraulikaggregat als Presse zum Umformen (Pressrecken) ausgebildet ist.

19. Vorrichtung nach Ansprüchen 15 bis 18, dadurch gekennzeichnet, dass Tellerfedern, mechanische Verriegelungen oder hydraulische Einrichtungen angeordnet sind, die während der Umformung bzw. Pressreckung die Trennebene(n) zuhalten.

20. Vorrichtung nach Ansprüchen 15 bis 19, dadurch gekennzeichnet, dass für die Druckumformung (Pressreckung) ein Umformstempel angeordnet ist, der auch als Auswerferstempel ausgebildet ist.

21. Vorrichtung zur Durchführung des Verfahrens nach Ansprüchen 10 bis 13, dadurch gekennzeichnet, dass das formgebende Werkzeug düsenseitig aus einer fest angeordneten, vorzugsweise kreisförmig ausgebildeten Aufspannplatte bzw. Aufspannplattenpaket mit je einem Formnesteinsatz für das Spritzgiessteil und das Fertigteil und schliessseitig aus um einen fest angeordneten Drehbolzen, der mit einer Formplatte und einer Aufspannplatte fest verbunden ist, um den Drehbolzen drehbaren, vorzugsweise kreisförmig ausgebildeten Formplattenpaketen, welche zwei in Führungsbuchsen bewegliche Pressreckstempel aufnehmen, besteht, wobei die Pressreckstempel derart angeordnet sind, dass sie mit den zugeordneten Formnesteinsätzen in der düsenseitigen Aufspannplatte fluchten und die mit dem Drehbolzen fest verbundene, nicht drehbare Formplatte auf der Schliessseite eine Bohrung bzw. Aussparung für die Aufnahme des Kopfes eines der beiden Pressreckstempel beim Schliessen des formgebenden Werkzeugs aufweist.

22. Vorrichtung nach Anspruch 21, dadurch gekennzeichnet, dass der düsenseitige Formnesteinsatz für das Fertigteil mit einem Auswerfer für den fertig geformten Gegenstand versehen ist.

23. Vorrichtung nach Anspruch 21, dadurch gekennzeichnet, dass die Pressreckstempel zweiteilig als Kern und Hülse ausgebildet sind.

24. Vorrichtung nach einem der Ansprüche 21 oder 23, dadurch gekennzeichnet, dass die Pressreckstempel in den Führungsbuchsen durch Federpakete in ihrer Ausgangslage gehalten werden.

25. Vorrichtung nach Ansprüchen 21 bis 24, dadurch gekennzeichnet, dass zwischen den schliessseitigen Formpaketen Tellerfederpakete angeordnet sind, die bei Verringerung des Abstandes der Formplatten von einander die Trennebene des Werkzeuges, durch Druckaufbau der Tellerfedern auf die Trennebene, geschlossen halten.

26. Vorrichtung nach Anspruch 25, dadurch gekennzeichnet, dass die Tellerfederpakete ganz oder teilweise durch mechanische oder hydraulische Verriegelungen ersetzt sind.

27. Vorrichtung nach Ansprüchen 22 bis 26, dadurch gekennzeichnet, dass sie düsenseitig mehrere Formnesteinsätze sowohl für die Spritzgiessteile als auch für die Fertigteile und schliessseitig eine diesen Formnesteinsätzen entsprechende Anzahl von Pressreckstempeln sowie Bohrungen bzw. Aussparungen in der Formplatte für die Aufnahme der Köpfe der nicht für die Druckumformung dienenden Pressreckstempel aufweist, wobei die Formnesteinsätze und die Pressreckstempel symmetrisch unter- und zueinander angeordnet sind.

28. Vorrichtung nach Ansprüchen 15 bis 27, dadurch gekennzeichnet, dass das neue bzw. die neuen Formnester für die Druckumformung (Pressreckung) eine von dem bzw. den Formnestern für die Herstellung des Spritzgiessteils getrennte Temperaturführung aufweist bzw. aufweisen.

## Claims

1. Method for the production of shaped parts from synthetic material, in which with the use of a device for plasticizing, preferably an injection moulding machine, the synthetic material which is to be processed is injected into a tool arranged therein having one or more separation planes, and during the cooling down phase in the tool the injection die casting is subjected to a pressure treatment, and thereafter with the use of a new mould nest is subjected to at least one deformation under pressure (pressure stretching), characterized in that during the cooling phase in the tool the injected die casting is produced using the compressive force of the closure unit of an injection moulding machine or using one or more hydraulic or compressed air cylinder(s) at

50 to 50000 KN, preferably
150 to 10000 KN,

and with the use of the new mould nest the injected die casting is subjected to a pressure of

100 to 800 N/mm²,

whereby the force of closure and the deformation force or respectively pressure stretching force can be controlled separately.

2. Method according to Claim 1, characterized in that the hydraulic- or compressed air cylinders are joined to a core drawing appliance which is connected with the injection moulding machine, whereby the core drawing appliance of the injection moulding machine operates at system pressures of

1 to 100 N/mm², preferably
4 to 25 N/mm².

3. Method according to Claim 1, characterized in that out of the nozzle (1) synthetic material is injected into a mould nest, whereby the separation plane(s) of the tool is or are held closed by the corresponding closure unit of the injection moulding machine, that during the cooling of the injection die casting or respectively of the shaped part (4) on the nozzle side or respectively ejector side, another mould nest is brought into the operating position to the injection die casting or respectively shaped part through opening the separation plane (25), and through reclosure of the tool after the spacer strips (2) or similar plates are moved out, a deformation under pressure or respectively pressure stretching is carried out by means of the correspondingly adjustable force, preferably infinitely adjustable force of the closure unit.

4. Method according to Claims 1 to 3, characterized in that after the deformation under pressure (pressure stretching) the injected die casting is subjected to a further deformation under pressure (pressure stretching) in a new mould nest, whereby the selected time between the two pressure treatments is set in dependence upon the cooling down and restoring behaviour of the synthetic material.

5. Method according to Claims 1 to 4, characterized in that the synthetic material introduced into the mould nest of the injection moulding machine contains inorganic or organic fibres, fillers or reinforcing substances.

6. Method according to Claim 5, characterized in that the fibres, fillers or reinforcing substances have asymmetrical shapes either in whole or in part.

7. Method according to Claims 1 to 6, characterized in that the mixture of synthetic material which is introduced into the mould nest of the injection moulding machine consists per 100 parts by weight of:

0.1 to 80 parts by weight, preferably
5   to 45 parts by weight,

of inorganic or organic fibres, fillers or reinforcing substances and
99.9 to 20 parts by weight, preferably
95   to 55 parts by weight

of synthetic material, in which if required in addition processing adjuvant substances are used.

8. Method according to Claims 1 to 7, characterized in that the fibres contained in the synthetic material have a fibre length of

0.001 to 10 mm, preferably
0.05  to  5 mm.

9. Method according to one or more of Claims 1 to 8, characterized in that one and the same mould nest is used for different synthetic materials or mixtures of synthetic materials.

10. Method according to Claims 1 or 2, characterized in that one injection die casting is injected on via a nozzle, preferably an immersion nozzle, which is brought to touch onto the mould nest assembly on the nozzle side for the injection die casting, and simultaneously or approximately simultaneously a second injection die casting which has already been injected is deformed in the mould nest assembly for the finished piece under the effect of pressure by a pressure stretching punch, and the cast on piece is separated, after the opening of the tool and the withdrawal of the immersion nozzle, and also the driving out of the tool cores from the corresponding injection die casting – or respectively finished piece – mould nest assemblies on the nozzle side and after rotation of corresponding form plates or respectively packs of form plates on the closing side of the tool, the finished shaped part is ejected or respectively released from the mould and on completion of the rotational movement, preferably through 180°, and with closure of the tool, the core of one pressure stretching punch with the shrunk on, injected injection die casting engages in the mould nest assembly for the finished part and the free core of the other press stretching punch engages into the mould nest assembly for the injection die casting.

11. Method according to Claim 10, characterized in that the deformation under pressure of the injection die casting by the pressure stretching punch takes place after the closing of the tool during the compression of the packs of plate springs which are arranged between the packs of form plates on the closure side, using the force of the closure unit of an injection moulding machine or using one or more hydraulic or compressed air cylinders.

12. Method according to Claim 11, characterized in that only the plate springs keep the separation plane closed during the injection process of the injection die casting, during the press stretching process and the subsequent pressure holding period.

13. Method according to Claim 12, characterized in that the injecting of the one injection die casting takes place within the duration of the deformation of the other injection die casting by pressure stretching.

14. Method according to one or more of Claims 1 to 13, characterized in that in the use of one or more new mould nests for the deformation under pressure (pressure stretching), the temperature control takes place such that the mould nest or nests, in which the deformation under pressure (pressure stretching) takes place, are preferably kept at a lower temperature than the mould nest or nests for the production of the injection die casting.

15. Device for the production of shaped parts from synthetic material, preferably using the method according to one or more of Claims 1 to 9, consisting of an injection moulding machine and of a forming tool with one or more separation planes, characterized in that the injection moulding machine is constructed both as a press to keep the separation plane(s) closed on the tool during injection, and also as a press for one or more deformations (pressure stretches) of the injection die casting, whereby during the injection moulding the closure unit, which consists of a mechanical device to close the tool, is used firstly to keep closed the separation plane(s) on the tool for the injection of an injection die casting or respectively shaped part and subsequently, able to be controlled separately as a pressure for one or more deformations (pressure stretches).

16. Device according to Claim 15, characterized in that the tool contains one or more sliders controlled by core drawing appliances which moves or move the corresponding mould nests on the nozzle side or respectively on the ejector side into the respective operating position, whereby in a first operating step the injection die casting is injected and through slider movement by means of hydraulic cylinders, which are connected to the core drawing appliances of the injection moulding machine, without or respectively after the opening of the separation plane of the precasting(s) or respectively shaped part(s), it is introduced into a second mould nest with the cooperation of the closing unit of the injection moulding machine as a press, and is deformed.

17. Device according to Claims 15 and 16, characterized in that the core drawing appliances and hydraulic cylinders are constructed as a press for deformation (pressure stretching).

18. Device according to Claims 15 to 17, characterized in that an external hydraulic unit is constructed as a press for deformation (pressure stretching).

19. Device according to Claims 15 to 18, characterized in that plate springs, mechanical locking mechanisms or hydraulic installations are arranged which keep the separation plane(s) closed during the deformation or respectively pressure stretching.

20. Device according to Claims 15 to 19, characterized in that for the deformation under pressure (pressure stretching) a deforming punch is arranged, which is also constructed as an ejector punch.

21. Device for carrying out the method according to Claims 10 to 13, characterized in that the forming tool consists on the nozzle side of a fixedly arranged clamping plate or clamping plate pack, preferably constructed in circular shape, with in each case one mould nest assembly for the injection die casting and the finished piece and consists on the closure side of form plate packs, preferably of circular construction, about a fixedly arranged pivot pin, which is fixedly connected to a form plate and to a clamping plate, so as to be rotatable about the pivot pin, which form plate packs hold two pressure stretching punches, which are movable in guide bushes, whereby the pressure stretching punches are arranged such that they are in alignment with the associated mould nest assemblies in the clamping plate on the nozzle side and the non-rotatable form plate, which is fixedly connected with the pivot pin, on the closure side has a bore or respectively recess to receive the head of one of the two pressure stretching punches on closure of the forming tool.

22. Device according to Claim 21, characterized in that the mould nest assembly on the nozzle side for the finished piece is provided with an ejector for the finished formed object.

23. Device according to Claim 21, characterized in that the pressure stretching punches are constructet in two parts as core and sleeve.

24. Device according to one of Claims 21 to 23, characterized in that the pressure stretching punches in the guide bushes are held in their initial position by sets of springs.

25. Device according to Claims 21 to 24, characterized in that between the form packs on the closure side, packs of plate springs are arranged, which on reduction of the distance of the form plates from each other, keep the separation plane of the tool closed through building up the pressure of the plate springs on the separation plane.

26. Device according to Claim 25, characterized in that the plate spring packs are replaced either entirely or partially by mechanical or hydraulic locking mechanisms.

27. Device according to Claims 22 to 26, characterized in that on the nozzle side it has a plurality of mould nest assemblies both for the injection die casting and also for the finished parts and on the closure side it has a number of pressure stretching punches corresponding to these mould nest assemblies and also has bores or respectively recesses in the form plate to receive the heads of the pressure stretching punches which are not serving for the deformation under pressure, the mould nest assemblies and the pressure stretching punches being arranged symmetrically under one another and with respect to one another.

28. Device according to Claims 15 to 27, characterized in that the new mould nest or nests for the deformation under pressure (pressure stretching) has or have a separate temperature control from the mould nest or nests for the manufacture of the injection die casting.

**Revendications**

1. Procédé pour la fabrication de pièces formées en matière plastique dans lequel la matière plastique à façonner par l'intermédiaire d'un dispositif de plastification, de préférence une presse d'injection est injectée dans un ou plusieurs plans de joint d'un moule associé, et la pièce moulée par injection est soumise à un traitement par compression au cours de la phase de refroidissement dans le moule, après quoi elle est soumise à au moins une transformation par compression (étirage par pressage) dans un nouveau moule de formage, caractérisé en ce que la pièce moulée par injection est produite, au cours de la phase de refroidissement dans le moule, en utilisant la force de compression de l'élément de fermeture d'une presse d'injection ou en utilisant un ou plusieurs cylindre(s) hydraulique(s) ou pneumatique(s) appliquant une force

50 à 50 000 KN, de préférence
150 à 10 000 KN,

et est soumise à une pression de

100 à 800 N/mm²

dans le nouveau moule de formage, la force de fermeture et la force de transformation ou force d'étirage par pressage étant réglables séparément.

2. Procédé selon la revendication 1, caractérisé en ce que les cylindres hydrauliques ou pneumatiques sont raccordés à une installation de traction du noyau qui est en liaison avec la presse d'injection, l'installation de traction du noyau de la presse d'injection travaillant à des pressions de 1 à 100 N/mm² de préférence de 4 à 25 N/mm².

3. Procédé selon la revendication 1, caractérisé en ce que la matière plastique est injectée dans un moule de formage par la buse (1), le plan ou les plans de joint de l'outil étant tenu(s) fermé(s) par l'élément de fermeture correspondant de la presse d'injection et en ce que au cours du refroidissement de la pièce moulée par injection ou de la pièce formée (4) on amène, du côté de la buse ou du côté de l'éjection, un nouveau moule et en ce que on effectue en fermant de nouveau l'outil, après le retrait des plaques d'écartement (2) ou de plaques analogues, une transformation par compression ou étirage par pressage à l'aide de la force réglable adéquate, de préférence la force continue et réglable de l'élément de fermeture.

4. Procédé suivant les revendications 2 à 3 caractérisée en ce que, après la transformation par compression (étirage à la presse), la pièce moulée par injection est soumise à une transformation par compression (étirage par pressage) supplémentaire dans un nouveau moule, l'intervalle de temps laissé entre les deux traitements par compression étant réglé en fonction du comportement au refroidissement et au retrait de la matière plastique.

5. Procédé suivant les revendications 1 à 4, caractérisé en ce que la matière plastique introduite dans le moule de formage de la presse d'injection contient des fibres, des matières de charge ou des matières renforçantes inorganiques ou organiques.

6. Procédé suivant la revendication 5, caractérisé en ce que les fibres, les matières de charge ou les matières renforçantes ont des formes entièrement ou partiellement asymétriques.

7. Procédé suivant les revendications 1 à 6, caractérisé en ce que le mélange de matière plastique introduit dans le moule de formage de la presse d'injection consiste, pour 100 parties en poids, en

0,1 à 80 parties en poids, de préférence
5   à 45 parties en poids,

de fibres, matières de charge ou matières renforçantes inorganiques ou organiques et en

99,9 à 20 parties en poids, de préférence
95   à 55 parties en poids,

de matière plastique, la mise en œuvre d'adjuvants de transformation supplémentaires étant éventuellement possible.

8. Procédé suivant les revendications 1 à 7, caractérisé en ce que les fibres contenues dans la matière plastique ont une longueur de

0,001 à 10 mm, de préférence
0,05   à   5 mm.

9. Procédé suivant une ou plusieurs des revendications 1 à 8, caractérisé en ce qu'on emploie un seul et même moule de formage pour des matières plastiques ou mélanges de matières plastiques différents.

10. Procédé suivant l'une des revendications 1 ou 2, caractérisé en ce qu'on moule une pièce par injection, par une buse, de préférence une buse plongeante, qui est amenée en butée contre le moule rapporté, destiné à la pièce à mouler du côté de la buse et, en même temps ou presque en même temps, on transforme une deuxième pièce déjà moulée dans le moule rapporté destiné à la pièce finie sous l'influence d'une pression exercée par un poinçon d'étirage par pressage et on sépare la carotte; après ouverture de l'outil et retrait de la buse plongeante ainsi qu'après le retrait des noyaux d'outil des moules rapportés de formage et des moules rapportés de finissage – côté buse – respectifs et rotation des plaques de formage ou des ensembles de plaques de formage correspondants – du côté de la fermeture de l'outil, on éjecte la pièce formée finie ou on la démoule et après achèvement du mouvement de rotation, de préférence à concurrence de 180°, et fermeture de l'outil, on encliquète le noyau de l'un des poinçons d'étirage par pressage, avec la pièce moulée contractée, dans le moule rapporté de formage de la pièce finie avec le noyau libre de l'autre poinçon d'étirage par pressage dans le moule rapporté de formage de la pièce injectée.

11. Procédé suivant la revendication 10, caractérisé en ce que la transformation par compression de la pièce moulée par injection s'effectue au moyen du poinçon d'étirage par pressage après la fermeture de l'outil lors de la compression des ensembles de ressorts à disques qui sont placés entre les ensembles de plaques de formage du côté de la fermeture, en utilisant la force de l'élément de fermeture d'une presse d'injection ou bien un ou plusieur(s) cylindre(s) hydraulique(s) ou pneumatique(s).

12. Procédé suivant la revendication 11, caractérisé en ce que seuls les ressorts à disques tiennent fermé le plan de joint au cours du moulage par injection de la préforme et de l'étirage par pressage, ainsi que pendant la période de maintien sous compression qui y fait suite.

13. Procédé suivant la revendication 12, caractérisé en ce que le moulage par injection d'une pièce est effectué pendant la durée de la transformation de l'autre pièce moulée par étirage par pressage.

14. Procédé suivant une ou plusieurs des revendications 1 à 13, caractérisé en ce que lors de l'emploi d'un ou plusieurs nouveau(x) moule(s) de formage pour la transformation par compression (étirage par pressage) on utilise une séquence de température telle que le ou les moule(s) de formage servant à la transformation par compression (étirage par pressage) est ou sont, de préférence, maintenu(s) à une température inférieure à celle du ou des moule(s) servant à la fabrication de la pièce moulée par injection.

15. Dispositif pour la fabrication de pièces formées en matière plastique, de préférence en utilisant le procédé suivant une ou plusieurs des revendications 1 à 9 consistant en une presse d'injection et en un outil générateur de la forme sur un ou plusieurs plans de joint, caractérisé en ce que la presse d'injection est conçue aussi bien comme presse pour maintenir fermé(s) le plan ou les plans de joint par rapport à l'outil lors de l'injection que comme presse pour une ou plusieurs transformations (étirages par pressage) de la pièce moulée par injection et en ce que, au cours du moulage par injection, l'élément de fermeture qui consiste en un dispositif mécanique pour la fermeture de l'outil sert d'abord à maintenir fermé(s) le plan ou les plans de joint par rapport à l'outil pour le moulage d'une pièce injection ou d'une pièce formée et ensuite comme presse, réglable séparément, pour une ou plusieurs transformations (étirages par pressage).

16. Dispositif suivant la revendication 15, caractérisé en ce que l'outil comprend un ou plusieurs poussoirs commandés par des tractions du noyau qui amène(nt) les moules de formage correspondants dans la position de travail voulue du côté de la buse ou du côté de l'éjection et en ce que, dans une première opération, la pièce est moulée par injection et est amenée et transformée dans un deuxième moule de formage sous l'action de l'élément de fermeture de la presse d'injection à titre de presse, le transfert se faisant par un mouvement de poussoir commandé par des cylindres hydrauliques qui sont raccordés aux dispositifs de traction du noyau de la presse d'injection, et ce sans ouverture ou après ouverture des plans de joint de la préforme ou des préformes ou de la pièce formée ou des pièces formées.

17. Dispositif suivant les revendications 15 et 16, caractérisé en ce que les dispositifs de traction du noyau et les cylindres hydrauliques sont conçus pour servir de presse pour la transformation (étirage par pressage).

18. Dispositif suivant les revendications 15 à 17, caractérisé en ce qu'un groupe hydraulique externe sert de presse pour la transformation (étirage par pressage).

19. Dispositif suivant les revendications 15 à 18, caractérisé en ce que des ressorts à disques, des verrouillages mécaniques ou des dispositifs hydrauliques sont prévus en vue de maintenir le plan ou les plans de joint fermé(s) pendant la transformation ou étirage par pressage.

20. Dispositif suivant les revendications 15 à 19, caractérisé en ce qu'il comporte pour la transformation par compression (étirage par pressage) un poinçon de transformation qui sert également de piston d'éjection.

21. Dispositif pour l'exécution du procédé suivant les revendications 10 à 13, caractérisé en ce que l'outil générateur de la forme consiste, du côté buse, en une plaque ou un ensemble de plaques de fixation disposée(s) fixement, de préférence circulaire, comportant (éventuellement chacune) un élément de moulage rapporté pour la pièce préformée et pour la pièce finie et, du côté de la fermeture, en un axe de rotation fixe qui est solidarisé avec une plaque de formage et une plaque de fixation, en des ensembles de plaques de formage, de préférence circulaires, agencés de manière à pouvoir tourner autour de l'axe de rotation, qui reçoivent deux poinçons d'étirage par pressage mobiles dans des douilles de guidage, les poinçons d'étirage par pressage étant disposés de telle manière qu'ils sont dans l'alignement des éléments de moulage rapportés dans la plaque de fixation côté buse, la plaque de formage non rotative solidarisée avec l'axe de rotation étant pourvue d'une perforation ou d'une cavité pour loger la tête de l'un des deux poinçons d'étirage par pressage lors de la fermeture de l'outil générateur de la forme.

22. Dispositif suivant la revendication 21, caractérisé en ce que le moule de formage rapporté, côté buse, destiné à la pièce finie est muni d'un élément d'éjection de l'objet formé fini.

23. Dispositif suivant la revendication 21, caractérisé en ce que le poinçon d'étirage par pressage comprend deux parties formant un noyau et une douille.

24. Dispositif suivant l'une des revendications 21 ou 23, caractérisé en ce que, dans leur position de départ, les poinçons d'étirage par pressage sont maintenus dans les douilles de guidage par des ensembles de ressorts.

25. Dispositif suivant les revendications 21 à 24, caractérisé en ce que des ensembles de ressorts à disques sont disposés entre les ensembles de plaques de formage du côté de la fermeture, ressorts qui, lors de la réduction de l'écartement entre les plaques de formage, maintiennent le plan de joint de l'outil fermé par suite de l'augmentation de la pression exercée par les ressorts à disques sur le plan de joint.

26. Dispositif suivant la revendication 25, caractérisé en ce que les ensembles de ressorts à disques sont remplacés totalement ou partiellement par des verrouillages mécaniques ou hydrauliques.

27. Dispositif suivant les revendications 22 à 26, caractérisé en ce qu'il comporte, du côté de la buse, plusieurs moules de formage rapportés aussi bien pour les pièces moulées préformées que pour les pièces finies et, du côté de la fermeture, un nombre de poinçons d'étirage par pressage qui correspond à ces moules de formage rapportés, ainsi que des perforations ou des cavités prévues dans la plaque de formage pour loger les têtes des poinçons d'étirage par pressage qui ne servent pas pour la transformation par compression, les moules de formage rapportés et les poinçons d'étirage par pressage étant disposés symétriquement les uns par rapport aux autres.

28. Dispositif suivant les revendications 15 à 27, caractérisé en ce que le ou les nouveau(x) moule(s) de formage servant à la transformation par compression (étirage par pressage) est ou sont utilisé(s) à des températures différentes de celles employées dans le ou les moule(s) de formage servant à la fabrication de la pièce moulée par injection.

Fig. 1

Fig. 2

Düsenseite ← | C | → Schließseite | A

37  44  42  43

40

41

39

45

31  32  33  34  35  36

46

D  B

Fig. 3

37  38

0 074 473

Fig.4

Fig.5

40

39

39

40

31

0 074 473